# EUROPEAN PATENT APPLICATION

(11) **EP 4 708 379 A1**
(43) Date of publication of application: **11.03.2026**
(21) Application number: 25199866.2
(22) Date of filing: 03.09.2025
(51) Int. Cl.: H01M 4/131, H01M 4/136, H01M 4/36, H01M 4/525, H01M 4/58, H01M 4/62, H01M 10/0525, H01M 4/02

(54) **POSITIVE ELECTRODE ACTIVE MATERIALS, POSITIVE ELECTRODES, AND RECHARGEABLE LITHIUM BATTERIES**

(30) Priority: 05.09.2024 KR 20240120543
(71) Applicant: Samsung SDI Co., Ltd, Gyeonggi-do 17084 (KR)
(72) Inventor: HA, Eunhyeon, 17084 Yongin-si, Gyeonggi-do (KR); KO, Donghyun, 17084 Yongin-si, Gyeonggi-do (KR); HAN, Da-Un, 17084 Yongin-si, Gyeonggi-do (KR); LEE, Minju, 17084 Yongin-si, Gyeonggi-do (KR); LEE, Junsik, 17084 Yongin-si, Gyeonggi-do (KR)
(74) Representative: Michalski Hüttermann & Partner Patentanwälte mbB

(57) **Abstract**

A positive electrode active material is provide, the positive electrode active material including a first positive electrode active material including a lithium iron phosphate-based compound; and a second positive electrode active material including lithium nickel-based composite oxide; wherein the second positive electrode active material is included in an amount of ≥ 1 wt% to ≤ 15 wt% based on 100 wt% of the first positive electrode active material and second positive electrode active material. The positive electrode active material, the positive electrode including the same, and the rechargeable lithium battery according to some example embodiments may achieve high capacity and excellent or suitable stability.

## Description

### BACKGROUND

### 1. Field

Positive electrode active materials, positive electrodes including the positive electrode active materials, and rechargeable lithium batteries the positive electrodes are disclosed.

### 2. Description of the Related Art

Portable information devices, such as cell phones, laptops, smart phones, and/or the like, as well as electric vehicles, have used rechargeable lithium batteries as a driving power source due to their high energy density and easy portability. Recently, research has been actively conducted to use rechargeable lithium batteries with high energy density as a driving power source, e.g., for hybrid and electric vehicles or as a power storage power source, e.g., for energy storage systems (ESSs).

Various positive electrode active materials have been investigated to realize rechargeable lithium batteries for these applications. Among them, lithium nickel-based oxides, lithium nickel-cobalt based composite oxides, lithium cobalt-based oxides, and/or lithium nickel-manganese based composite oxides are mainly used as positive electrode active materials. However, these positive electrode active materials have a problem in that heat is generated if (e.g., when) a short circuit occurs in a rechargeable lithium battery, causing thermal runaway. Therefore, research is still needed or desired to solve this problem.

### SUMMARY

Aspects according to some embodiments are directed toward a positive electrode active material for implementing high capacity and enhanced (e.g., high, excellent or suitable) stability, a positive electrode including the same, and a rechargeable lithium battery including the positive electrode.

Additional aspects will be set forth in part in the description which follows and, in part, will be apparent from the description, or may be learned by practice of the presented embodiments of the disclosure.

In some example embodiments, a positive electrode active material includes a first positive electrode active material including a lithium iron phosphate-based compound; and a second positive electrode active material including a lithium nickel-based composite oxide; wherein the second positive electrode active material is ≥ 1 to ≤ 15 wt% in amount based on a total 100 wt% of the first positive electrode active material and the second positive electrode active material.

In some example embodiments, a positive electrode includes a current collector; and a positive electrode active material layer on the current collector; wherein the positive electrode active material layer includes the positive electrode active material and a thin walled (thin-walled) carbon nanotube.

In some example embodiments, a rechargeable lithium battery includes the positive electrode, a negative electrode, and an electrolyte.

The positive electrode active material, the positive electrode including the same, and the rechargeable lithium battery according to some example embodiments may achieve high capacity and enhanced (e.g., high, excellent, or suitable) stability.

### BRIEF DESCRIPTION OF THE DRAWINGS

The above and other objects, features and enhancements of the present disclosure will become more apparent to those of ordinary skill in the art by describing example embodiments thereof in more detail with reference to the accompanying drawings, in which:
FIG. 1 is a schematic illustration of a cylindrical battery according to one or more embodiments of the disclosure;
FIG. 2 is a schematic illustration of a prismatic battery according to one or more embodiments of the disclosure;
FIG. 3 is a schematic illustration of a pouch-type or kind battery according to one or more embodiments of the disclosure; and
FIG. 4 is a schematic illustration of a pouch-type or kind battery according to one or more embodiments of the disclosure.

### DETAILED DESCRIPTION

Hereinafter, specific embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, the term "combination thereof" refers to a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, (e.g., act or task) step, element, and/or a (e.g., any suitable) combination thereof, but it does not preclude the possibility of the presence or addition of one or more other features, number, (e.g., act or task) step, element, and/or a (e.g., any suitable) combination thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the drawings, the thickness of layers, films, panels, regions, and/or the like, may be exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

The term "layer" as used herein includes not only a shape formed on the whole surface if (e.g., when) viewed from a plan view, but also a shape formed on a partial surface.

The average particle diameter may be measured by a suitable method (e.g., known to those skilled in the art), for example, by a particle size analyzer, or by a transmission electron microscope image or a scanning electron microscope image. In one or more embodiments, it is possible to obtain an average particle diameter value by measuring using a dynamic light scattering method, performing data analysis, counting the number of particles for each particle size range, and calculating the average particle diameter from this. Unless otherwise defined, the average particle diameter (D₅₀) may refer to the diameter of particles having a cumulative volume of 50 volume% in the particle size distribution. As used herein, if (e.g., when) a definition is not otherwise provided, the average particle diameter (D₅₀) refers to a diameter of particles having a cumulative volume of 50 volume% in the particle size distribution that is obtained by measuring the size (diameter or major axis length) of about 20 particles at random in a scanning electron microscope image. Also, a laser scattering method may be utilized to measure the average particle diameter (D₅₀). In the laser scattering method, target particles are distributed in a dispersion solvent, introduced into a laser scattering particle size measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

Herein, the term "or" is not to be construed as an exclusive meaning, for example, "A or B" is construed to include A, B, A+B, and/or the like.

The term "metal" is interpreted as a concept including ordinary metals, transition metals and metalloids (semi-metals).

### Positive Electrode Active Material

In some example embodiments, a positive electrode active material includes a first positive electrode active material including a lithium iron phosphate-based compound; and a second positive electrode active material including lithium nickel-based composite oxide. The second positive electrode active material is included in an amount of ≥ 1 to ≤ 15 wt% based on a total 100 wt% of the first positive electrode active material and the second positive electrode active material.

The positive electrode active material may be used as a positive electrode active material by mixing a lithium iron phosphate-based compound and a lithium nickel-based composite oxide in an appropriate or suitable ratio, thereby ensuring safety while increasing the capacity and enabling operation at high voltage.

### First Positive Electrode Active Material

The first positive electrode active material according to some example embodiments includes a lithium iron phosphate-based compound. The lithium iron phosphate-based compound can play a role in improving heat resistance and thermal stability, as well as increasing capacity and/or increasing output. For example, the lithium iron phosphate-based compound may be represented by Chemical Formula 1 or Chemical Formula 2.

[Chemical Formula 1] Liₐ₁Fe₍₁₋ₓ₁₎M1ₓ₁PO₄

In Chemical Formula 1, 0.90≤a1≤1.5, 0≤x1≤0.4, and M1 is Al, B, Ca, Ce, Cr, Cu, La, Mg, Mn, Mo, Nb, Ni, Si, Sn, Sr, Ti, V, W, Y, Zn, Zr, and/or a (e.g., any suitable) combination thereof. Herein, 0.90≤a1≤1.5, for example, 0.90≤a1≤1.2, or 0.95≤a1≤1.1. Additionally, 0≤x1≤0.4, for example, 0≤x1≤0.3, 0≤x1≤0.2, 0≤x1 ≤0.1, or 0≤x1≤0.05.

[Chemical Formula 2] Liₐ₂Mnₓ₂Fe_{(1-x2-y2)}M2_{y2}PO₄

In Chemical Formula 2, 0.90≤a2≤1.5, 0.1≤x2≤0.9, 0≤y2≤0.9, and M2 is Al, B, Ca, Ce, Cr, Cu, La, Mg, Mo, Nb, Ni, Si, Sn, Sr, Ti, V, W, Y, Zn, Zr, and/or a (e.g., any suitable) combination thereof. Herein, 0.90≤a2≤1.5, for example, 0.90≤a2≤ 1.2, or 0.95≤a2≤1.1. Additionally, 0.1≤x2≤0.9, for example, 0.3≤x2≤0.9, or 0.4≤ x2≤0.8, and 0≤y2≤0.4, for example, 0≤y2≤0.3, 0≤y2≤0.2, 0≤y2≤0.1, or 0≤y2 ≤0.05.

In some embodiments, the lithium iron phosphate-based compound may include LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, and/or a (e.g., any suitable) combination thereof.

The first positive electrode active material including the lithium iron phosphate-based compound is in the form of particles, and the average particle diameter (D₅₀) of the particles may be ≥ 0.01 µm to ≤ 2 µm, for example, ≥ 0.1 µm to ≤ 1.8 µm, or ≥ 0.7 µm to ≤ 1.7 µm. As used herein, if (e.g., when) a definition is not otherwise provided, the average particle diameter (D₅₀) refers to a diameter of particles having a cumulative volume of 50 volume% in the particle size distribution that is obtained by measuring the size (diameter or major axis length) of about 20 particles at random in a scanning electron microscope image for positive electrode active materials.

The first positive electrode active material containing the lithium iron phosphate-based compound may have a specific surface area of ≥ 1 m²/g to ≤ 20 m²/g, for example, ≥ 3 m²/g to ≤ 18 m²/g, ≥ 5 m²/g to ≤ 15 m²/g, or ≥ 8 m²/g to ≤ 12 m²/g. The specific surface area of the first positive electrode active material is measured by using physical and chemical adsorption phenomena and a Brunauer-Emmett-Teller (BET) method. For example, after measuring a weight of the first positive electrode active material and an amount of nitrogen gas adsorbed on the first positive electrode active material surface by absorbing the nitrogen gas thereon, the specific surface area thereof is obtained according to a BET calculation equation. If the specific surface area of the first positive electrode active material is included within these ranges, not only the heat resistance, thermal stability, and/or the like may be improved, but also an output may be increased.

In some example embodiments, the lithium iron phosphate-based compound may be in the form of first particles, second particles, and/or a (e.g., any suitable) mixture of first particles and second particles.

The first particles may be an assembly of multiple nano-sized primary particles or a secondary particle. The primary particles may have a spherical or ellipsoidal shape as the primary particles are closely packed together. The average particle diameter of the first particles may be, for example, ≥ 2 µm to ≤ 15 µm, ≥ 3 µm to ≤ 12 µm, or ≥ 3 µm to ≤ 10 µm. The average particle diameter of the first particle may be larger than the average particle diameter of the second particle, which will be described in more detail later. The average particle diameter of the primary particles of the first particle may be, for example, ≥ 10 nm to ≤ 400 nm, ≥ 20 nm to ≤ 300 nm, or ≥ 50 nm to ≤ 200 nm. For example, the average particle diameter (D₅₀) of the first particles may be obtained by randomly selecting about 30 first particles from an electron microscope image of the lithium iron phosphate-based compound, measuring the particle diameter, and taking the diameter of the particles having a cumulative volume of 50 volume% from the particle size distribution as the average particle diameter. The average particle diameter (D₅₀) of the primary particles of the first particle may be obtained by measuring the sizes of about 30 primary particles in an electron microscope image of the surface or cross-section of the first particle and taking the diameter of the particles having a cumulative volume of 50 volume% in the particle size distribution as the average particle diameter.

A porosity of the first particle may be ≥ 20% to ≤ 50%. The porosity may be obtained by measuring an area ratio of the portion occupied by pores within the particle using an image analysis program such as Image J in a scanning electron microscope image of a cross-section of the first particle.

The second particle may have the form of a single particle. An average particle diameter of the second particles may be, for example, ≥ 10 nm to ≤ 900 nm, ≥ 50 nm to ≤ 500 nm, or ≥ 100 nm to ≤ 300 nm. The average particle diameter of the second particles may be smaller than the average particle diameter of the first particles, and may be equal to or larger than the average particle diameter of the primary particles of the first particles. For example, the average particle diameter (D₅₀) of the second particles can be obtained by randomly selecting about 30 second particles from an electron microscope image of the lithium iron phosphate-based compound, measuring the particle sizes, and taking the diameter of the particles having a cumulative volume of 50 volume% from the particle size distribution as the average particle diameter.

The lithium iron phosphate-based compound may further include a carbon coating layer on the particle surface. The carbon coating layer may improve the electrical conductivity of the lithium iron phosphate-based compound and reduce the resistance of the positive electrode. The carbon coating layer may be formed using at least one raw material selected from among, for example, glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenol resin, a pitch resin, and a tar resin. For example, the carbon coating layer may be formed by arranging the raw materials on the surface of the lithium iron phosphate-based compound particles and then performing a sintering process.

### Second Positive Electrode Active Material

The second positive electrode active material according to some example embodiments includes a lithium nickel-based composite oxide. By including the lithium nickel-based composite oxide, the characteristics of lithium iron phosphate-based compounds such as heat resistance and/or thermal stability are maintained, while the capacity is increased and operation at high voltage is enabled. For example, the lithium nickel-based composite oxide may be represented by Chemical Formula 3.

[Chemical Formula 3] Liₐ₃Niₓ₃M3_{y3}M4_{z3}O_{2-b3}X_{b3}

In Chemical Formula 3, 0.9≤a3≤1.8, 0.3≤x3≤1, 0≤y3≤0.7, 0≤z3≤0.7, 0.9≤x3+y3+z3≤1.1, and 0≤b3≤0.1, and M3 and M4 may each independently be one or more elements selected from among Al, B, Ba, Ca, Ce, Co, Cr, Cu, Fe, Mg, Mn, Mo, Nb, Si, Sn, Sr, Ti, V, W, Zn, and Zr, and X is one or more elements selected from among F, P, and S.

In some embodiments, in Chemical Formula 3, 0.6≤x3≤1, 0≤y3≤0.4, and 0≤z3≤0.4, or 0.8≤x3≤1, 0≤y3≤0.2, and 0≤z3≤0.2, or 0.9≤x3<1, 0<y3≤0.1, and 0≤z3≤0.1.

For example, the lithium nickel-based composite oxide may be a high nickel-based positive electrode active material in which a nickel content (e.g., amount) is greater than or equal to 80 mol%, greater than or equal to 85 mol%, greater than or equal to 90 mol%, greater than or equal to 91 mol%, greater than or equal to 94 mol%, or greater than or equal to 99 mol% based on 100 mol% of all metals excluding lithium in the lithium nickel-based composite oxide. The high nickel-based positive electrode active material may achieve high capacity and may be applied to high-capacity, and high-density rechargeable lithium batteries.

The second positive electrode active material including the lithium nickel-based composite oxide may be in a form of particles, and the particles may be in a form of secondary particles formed by agglomeration of a plurality of primary particles, single particles, and/or a (e.g., any suitable) combination thereof. The secondary particles and single particles may be spherical, elliptical, polyhedral, or irregular in shape, and the primary particles constituting the secondary particles may be spherical, elliptical, plate-shaped, and/or a (e.g., any suitable) combination thereof.

An average particle diameter (D₅₀) of the second positive electrode active material may be ≥ 10 µm to ≤ 25 µm, for example, ≥ 11 µm to ≤ 20 µm, or ≥ 12 µm to ≤ 18 µm. As used herein, if (e.g., when) a definition is not otherwise provided, the average particle diameter (D₅₀) refers to a diameter of particles having a cumulative volume of 50 volume% in the particle size distribution that is obtained by measuring the size (diameter or major axis length) of about 20 particles at random in a scanning electron microscope image for positive electrode active materials.

The second positive electrode active material including the lithium nickel-based composite oxide may have a specific surface area of ≥ 0.1 m²/g to ≤ 1.0 m²/g, for example, ≥ 0.15 m²/g to ≤ 0.8 m²/g, ≥ 0.2 m²/g to ≤ 0.6 m²/g, or ≥ 0.25 m²/g to ≤ 0.5 m²/g. The specific surface area of the second positive electrode active material is measured by using the physical and chemical adsorption phenomena and the Brunauer-Emmett-Teller (BET) method. For example, after measuring a weight of the second positive electrode active material weight and an amount of nitrogen gas absorbed on the second positive electrode active material surface by absorbing (and/or adsorbing) the nitrogen gas thereon, the specific surface area is obtained by using the BET calculation equation. If the specific surface area of the second positive electrode active material is included within these ranges, not only the heat resistance, thermal stability, and/or the like may be improved, but also the capacity and/or output may be increased.

In some example embodiments, the second positive electrode active material may be included in an amount of ≥ 1 wt% to ≤ 15 wt%, for example ≥ 3 wt% to ≤ 15 wt%, ≥ 1 wt% to ≤ 12 wt%, or ≥ 5 wt% to ≤ 10 wt% based on 100 wt% of the first positive electrode active material and the second positive electrode active material. In addition, the first positive electrode active material may be included in an amount of ≥ 85 wt% to ≤ 99 wt%, for example ≥ 85 wt% to ≤ 97 wt%, ≥ 88 wt% to ≤ 99 wt%, or ≥ 90 wt% to ≤ 95 wt% based on 100 wt% of the first positive electrode active material and second positive electrode active material. When the contents of the first positive electrode active material and the second positive electrode active material are each within the above ranges, heat resistance and thermal stability may be improved, while capacity and/or output may also be increased.

### Positive Electrode

In some example embodiments, a positive electrode includes a current collector; and a positive electrode active material layer on the current collector; and the positive electrode active material layer includes the positive electrode active material (e.g., described above) and a thin walled (thin-walled) carbon nanotube. In some embodiments, the positive electrode active material layer (e.g., in addition to the mixture of the lithium iron phosphate-based compound and the lithium nickel-based composite oxide as a positive electrode active material) may further include another type (kind) of positive electrode active material, and optionally may further include a binder and/or other conductive materials in addition to the thin walled carbon nanotube.

The positive electrode may secure safety, as well as increasing capacity, and enabling operation at a high voltage by using the mixture of the lithium iron phosphate-based compound and the lithium nickel-based composite oxide as a positive electrode active material. In addition, the positive electrode may secure excellent or suitable conductivity and reduce resistance by including the thin walled carbon nanotube as a conductive material and appropriately or suitably controlling its content (e.g., amount), and may concurrently (e.g., simultaneously), even smoothen a flow of ions. That is, by using the thin walled carbon nanotube as a conductive material (e.g., electron conductor) at a suitable amount, the flow of ions may be smooth.

### Positive Electrode Active Material Layer

The positive electrode active material layer according to some example embodiments is arranged on a current collector and includes the positive electrode active material and the thin walled carbon nanotube. The positive electrode active material has been described above and will not be repeatedly described in more detail.

### Conductive Material

The conductive material according to some example embodiments, which is used to apply (e.g., impart) conductivity to an electrode, includes the thin walled carbon nanotube and in addition to the thin walled carbon nanotube, further includes natural graphite, artificial graphite, carbon black, acetylene black, Ketjen black, carbon fiber, carbon nanofiber, carbon nanotube, and/or the like; a metal powder- or metal fiber-type (kind) metal-based material containing copper, nickel, aluminum, silver, and/or the like; a conductive polymer such as a polyphenylene derivative and/or the like; and/or a (e.g., any suitable) mixture thereof.

The thin walled carbon nanotube (TWCNT) refers to carbon nanotube with 2 to 7 carbon walls and may have an average diameter of less than or equal to ≤ 10 nm. Herein, the thin walled carbon nanotube may have an average diameter of ≥ 1 nm to ≤ 10 nm, for example, ≥ 1 nm to ≤ 9 nm, or ≥ 1 nm to ≤ 8 nm and may have ≥ 3 to ≤ 6 carbon walls, for example, ≥ 4 to ≤ 5 carbon walls. If the thin walled carbon nanotube has an average diameter and the number of carbon walls within each of the above ranges, resistance may be reduced, thereby realizing a rechargeable lithium battery with a long life-span. Also, as used herein, if (e.g., when) a definition is not otherwise provided, the average diameter of the tube refers to a diameter of tubes having a cumulative volume of 50 volume% in the tube cross-sectional size distribution that is obtained by measuring the size (diameter or major axis length) of about 20 tubes at random in a scanning electron microscope image.

The thin walled carbon nanotube may have an average length (e.g., longitudinal length of the carbon nanotube) of ≥ 30 µm to ≤ 100 µm, for example, ≥ 30 µm to ≤ 90 µm, or ≥ 30 µm to ≤ 80 µm. If the thin walled carbon nanotube has an average length within these ranges, resistance may be reduced, thereby realizing a rechargeable lithium battery with a long life-span.

The thin walled carbon nanotube may have an aspect ratio (average length/average diameter) of ≥ 3000 to ≤ 10000, for example, ≥ 3000 to ≤ 9000 or ≥ 3000 to ≤ 8000. The aspect ratio is defined as a ratio of a length of a longitudinal length passing through a center of a carbon nanotube unit and a diameter normal (e.g., perpendicular or normal) to the longitudinal length. If the aspect ratio of the thin walled carbon nanotube is within these ranges, the specific surface area of the thin walled carbon nanotube may be increased, thereby increasing a contact area of the thin walled carbon nanotube with the positive electrode active material and thus improving output characteristics as the conductivity is increased. Herein, the average diameter and the average length of the thin walled carbon nanotube may be measured by using a field emission scanning electron microscope. For example, the aspect ratio, which is the ratio of the longitudinal length to the diameter, ranges from ≥ 3000 to ≤ 10000. Also, in the present context, a higher aspect ratio refers to that the carbon nanotube is much longer compared to its diameter.

Based on the total 100 wt% of the positive electrode active material layer, the thin walled carbon nanotube may be included in an amount of ≥ 0.1 wt% to ≤ 1.0 wt%, for example, ≥ 0.2 wt% to ≤ 1.0 wt%, ≥ 0.2 wt% to ≤ 0.8 wt%, ≥ 0.4 wt% to ≤ 1.0 wt%, ≥ 0.4 wt% to ≤ 0.8 wt%, or ≥ 0.4 wt% to ≤ 0.6 wt%. If the positive electrode active material layer includes the thin walled carbon nanotube within these ranges, compared with a related art (e.g., conventionally-used) mixture of carbon nanotube and nanocarbon, even in these small quantities, it may not only enhance or improve resistance, but also lead to excellent or suitable results in terms of interface resistance and ion resistance.

The thin walled carbon nanotube may have a specific surface area of ≥ 200 m²/g to ≤ 300 m²/g, for example, ≥ 210 m²/g to ≤ 290 m²/g, ≥ 220 m²/g to ≤ 280 m²/g, or ≥ 235 m²/g to ≤ 275 m²/g. The specific surface area of the thin walled carbon nanotube is measured by using the physical and chemical adsorption phenomena and the Brunauer-Emmett-Teller (BET) method. For example, after measuring a weight of the thin walled carbon nanotube and measuring an amount of nitrogen gas absorbed on the thin walled carbon nanotube surface by absorbing (and/or adsorbing) the nitrogen gas thereon, the specific surface area is obtained by using the BET calculation equation. If the specific surface area of the thin walled carbon nanotube is included within these ranges, low resistance and a smooth flow of ions may be concurrently (e.g., simultaneously) achieved due to excellent or suitable conductivity, and the amount of the conductive material may be reduced, thereby preventing or reducing capacity deterioration due to a decrease in the fraction (e.g., amount) of the positive electrode active material.

In the positive electrode active material layer, a ratio of a specific surface area of the thin walled carbon nanotube to a specific surface area of the positive electrode active material in the positive electrode active material layer may be ≥ 10% to ≤ 40%, for example ≥ 10% to ≤ 30%, or ≥ 15% to ≤ 30%.

In a positive electrode, a ratio of a specific surface area of a conductive material to that of a positive electrode active material is a parameter that determines the degree to which the conductive material surrounds or connects the active material. Accordingly, if the ratio of the specific surface area of the thin walled carbon nanotube to that of the positive electrode active material in the positive electrode active material layer is included within the above ranges, not only low resistance and concurrently (e.g., simultaneously) a smooth ion flow may be achieved due to excellent or suitable conductivity, but also the ion flow may not be disturbed by agglomeration or excessive presence of the conductive material (e.g., the ion flow may be stable). In addition, the amount of the conductive material may be reduced, preventing or reducing capacity deterioration due to a decrease in the fraction (e.g., amount) of the positive electrode active material.

In some embodiments, the positive electrode active material layer may have a total thickness of ≥ 40 µm to ≤ 300 µm , for example, ≥ 40 µm to ≤ 250 µm , ≥ 50 µm to ≤ 200 µm , or ≥ 60 µm to ≤ 100 µm.

### Binder

The binder according to some example embodiments improves binding properties of positive electrode active material particles with one another and with a current collector. Representative examples of the added binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but the present disclosure is not limited thereto.

Based on 100 wt% of the positive electrode active material layer, a content (e.g., amount) of the positive electrode active material may be ≥ 90 wt% to ≤ 99.8 wt%, or ≥ 95 wt% to ≤ 99 wt%, and a content (e.g., amount) of the binder may be ≥ 0.1 wt% to ≤ 5 wt%, or ≥ 0.5 wt% to ≤ 2.5 wt%.

### Current Collector

The current collector according to some example embodiments is not particularly limited as long as it is conductive without causing chemical changes in the rechargeable lithium battery, and non-limiting examples may include aluminum (Al), stainless steel (SUS), indium (In), and magnesium. (Mg), titanium (Ti), iron (Fe), cobalt (Co), nickel (Ni), zinc (Zn), germanium (Ge), lithium (Li), and/or a (e.g., any suitable) combination thereof. For example, the current collector may include aluminum (Al). Herein, the shape of the current collector may be plate-shaped or thin-shaped (e.g., as a thin film or foil).

### Rechargeable Lithium Battery

In some example embodiments, a rechargeable lithium battery includes the positive electrode; a negative electrode; and an electrolyte. Here, the electrolyte may be a liquid electrolyte or a solid electrolyte.

For example, in some example embodiments, a rechargeable lithium battery includes the aforementioned positive electrode, a negative electrode, a separator between the positive electrode and negative electrode, and an electrolyte solution. As another example, an all-solid-state rechargeable battery includes the aforementioned positive electrode, a negative electrode, and a solid electrolyte layer between the positive electrode and negative electrode.

Below, a rechargeable lithium battery using an electrolyte solution is described as an example.

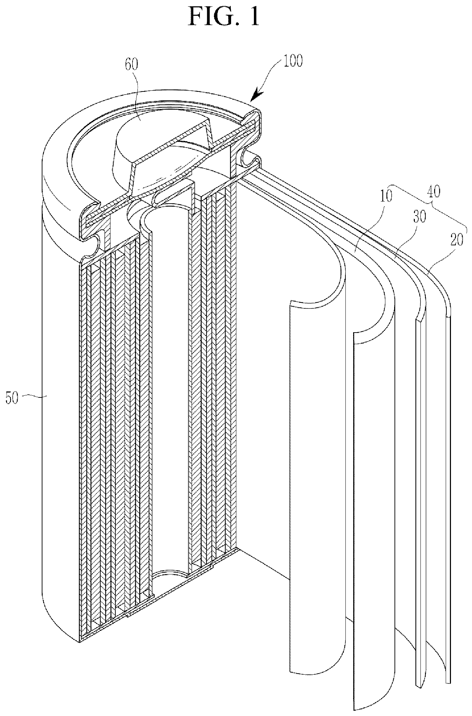

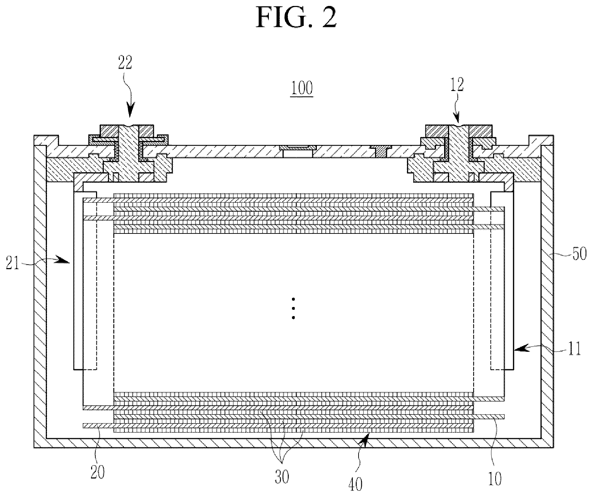

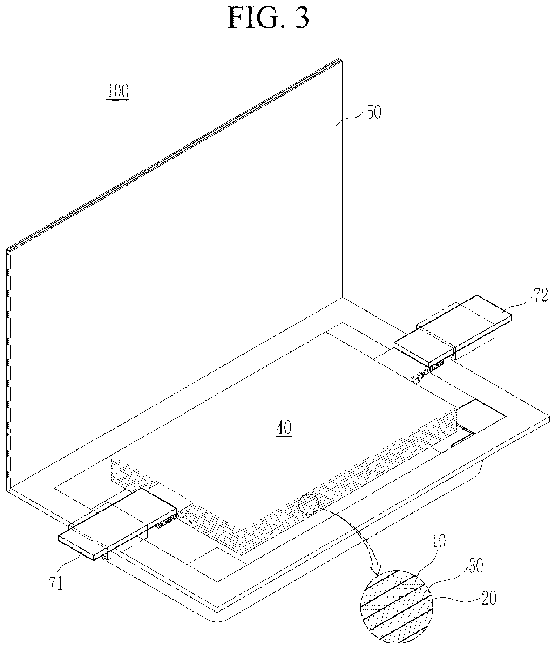

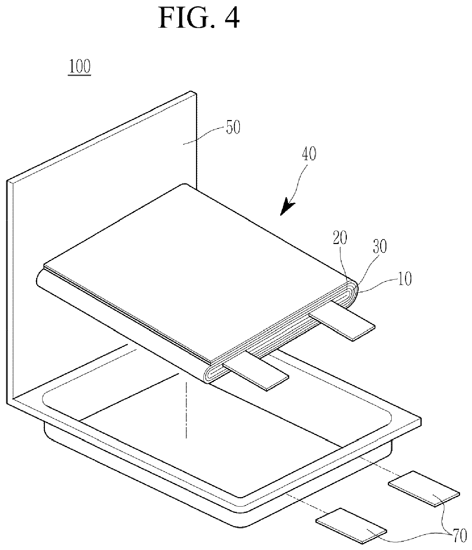

The rechargeable lithium battery may be classified into cylindrical, prismatic, pouch, coin, and/or the like, depending on its shape. FIGS. 1 to 4 are schematic views showing the rechargeable lithium battery according to some example embodiments, where FIG. 1 shows a cylindrical battery, FIG. 2 shows a prismatic battery, and FIGS. 3 and 4 each show a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

### Negative Electrode

The negative electrode may include a current collector and a negative electrode active material layer on the current collector, the negative electrode active material layer may include a negative electrode active material, and may further include a binder, a conductive material, and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof), and/or a (e.g., any suitable) combination thereof. The Sn-based negative electrode active material may be Sn, SnOₓ (0<x≤2, e.g., SnO₂), a Sn alloy, and/or a (e.g., any suitable) combination thereof.

The silicon-carbon composite may be a composite of silicon and amorphous carbon. An average particle diameter (D₅₀) of the silicon-carbon composite particles may be, for example, ≥ 0.5 µm to ≤ 20 µm. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and/or calcined coke.

When the silicon-carbon composite includes silicon and amorphous carbon, a content (e.g., amount) of silicon may be ≥ 10 wt% to ≤ 50 wt% and a content (e.g., amount) of amorphous carbon may be ≥ 50 wt% to ≤ 90 wt% based on 100 wt% of the silicon-carbon composite. In addition, if (e.g., when) the composite includes silicon, amorphous carbon, and crystalline carbon, a content (e.g., amount) of silicon may be ≥ 10 wt% to ≤ 50 wt%, a content (e.g., amount) of crystalline carbon may be ≥ 10 wt% to ≤ 70 wt%, and a content (e.g., amount) of amorphous carbon may be ≥ 20 wt% to ≤ 40 wt% based on 100 wt% of the silicon-carbon composite.

Additionally, a thickness of the amorphous carbon coating layer may be ≥ 5 nm to ≤ 100 nm. An average particle diameter (D₅₀) of the silicon particles (primary particles) may be ≥ 10 nm to ≤ 1 µm, or ≥ 10 nm to ≤ 200 nm. The silicon particles may exist as silicon alone, in the form of a silicon alloy, or in an oxidized form. The oxidized form of silicon may be represented by SiOₓ (0<x≤2). At this time, the atomic content (e.g., amount) ratio of Si:O, which indicates a degree of oxidation, may be ≥ 99:1 to ≤ 33:67. As used herein, if (e.g., when) a definition is not otherwise provided, an average particle diameter (D₅₀) indicates a particle where an accumulated volume is about 50 volume% in a particle distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of ≥ 1:99 to ≤ 90:10.

### Binder

The binder serves to adhere (e.g., well adhere) the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting (e.g., adjusting) viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber (e.g., in the shape of a fiber), and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material (e.g., electron conductor) is included to provide electrode conductivity and any electrically conductive material may be used as a conductive material unless it causes a chemical change. Examples of the conductive material include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminum silver, and/or the like; a conductive polymer such as a polyphenylene derivative; and/or a (e.g., any suitable) mixture thereof.

A content (e.g., amount) of the negative electrode active material may be ≥ 95 wt% to ≤ 99.5 wt% based on 100 wt% of the negative electrode active material layer, and a content (e.g., amount) of the binder may be ≥ 0.5 wt% to ≤ 5 wt% based on 100 wt% of the negative electrode active material layer. For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, ≥ 1 µm to ≤ 20 µm, ≥ 5 µm to ≤ 15 µm, or ≥ 7 µm to ≤ 10 µm.

### Electrolyte

In some embodiments, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether group), and/or the like; amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types (kinds), and if (e.g., when) two or more types (kinds) are used in a mixture, a mixing ratio can be appropriately or suitably adjusted according to the desired or suitable battery performance, which is known to those working in the field.

When using a carbonate-based solvent, a cyclic carbonate and a chain carbonate may be mixed and used, and the cyclic carbonate and the chain carbonate may be mixed in a volume ratio of ≥ 1:1 to ≤ 1:9.

The non-aqueous organic solvent may further include an aromatic hydrocarbon-based organic solvent. For example, a carbonate-based solvent and an aromatic hydrocarbon-based organic solvent may be mixed and used in a volume ratio of ≥ 1:1 to ≤ 30:1.

The electrolyte solution may further include vinylethyl carbonate, vinylene carbonate, or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of ≥ 0.1 M to ≤ 2.0 M. When the concentration of lithium salt is within the above range, the electrolyte solution has appropriate or suitable ionic conductivity and viscosity, and thus excellent or suitable performance can be achieved and lithium ions can move effectively.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and/or polypropylene, polyester such as polyethylene terephthalate and/or polybutylene terephthalate, polyacetal, polyamide, polyimide, polycarbonate, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The porous substrate may have a thickness of ≥ 1 µm to ≤ 40 µm, for example, ≥ 1 µm to ≤ 30 µm, ≥ 1 µm to ≤ 20 µm, ≥ 5 µm to ≤ 15 µm, or ≥ 10 µm to ≤ 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto. An average particle diameter (D₅₀) of the inorganic particles may be ≥ 1 nm to ≤ 2000 nm, for example, ≥ 100 nm to ≤ 1000 nm, or ≥ 100 nm to ≤ 700 nm.

The organic material and the inorganic material may be mixed in one coating layer, or a coating layer including an organic material and a coating layer including an inorganic material may be stacked.

The thickness of the coating layer may be ≥ 0.5 µm to ≤ 20 µm, for example, ≥ 1 µm to ≤ 10 µm, or ≥ 1 µm to ≤ 5 µm.

Examples and comparative examples of the present disclosure are described below. However, the following examples are only examples of the present disclosure, and the present disclosure is not limited to the following examples.

### Preparation Example 1

LiFePO₄ as a lithium iron phosphate-based compound was used to prepare a first positive electrode active material.

### Preparation Example 2

Ni_{0.88}Co_{0.11}Al_{0.01}(OH)₂ and LiOH were mixed in a mole ratio of 1:1.05 and then, heat-treated at 845 °C under an oxygen atmosphere for 8 hours to prepare a second positive electrode active material having a composition of Li_{1.05}Ni_{0.88}Co_{0.11}Al_{0.01}O₂ and including a lithium nickel-based composite oxide in the form of secondary particles having an average particle diameter (D₅₀) of about 14 µm.

99 wt% of the first positive electrode active material according to Preparation Example 1 and 1 wt% of the second positive electrode active material were mixed to prepare a final positive electrode active material.

### Preparation Example 3

A positive electrode active material was prepared in substantially the same manner as in Preparation Example 2 except that the final positive electrode active material was prepared by mixing 95 wt% of the first positive electrode active material according to Preparation Example 1 and 5 wt% of the second positive electrode active material.

### Preparation Example 4

A positive electrode active material was prepared in substantially the same manner as in Preparation Example 2 except that the final positive electrode active material was prepared by mixing 90 wt% of the first positive electrode active material according to Preparation Example 1 and 10 wt% of the second positive electrode active material.

### Preparation Example 5

A positive electrode active material was prepared in substantially the same manner as in Preparation Example 2 except that the final positive electrode active material was prepared by mixing 85 wt% of the first positive electrode active material according to Preparation Example 1 and 15 wt% of the second positive electrode active material.

### Preparation Example 6

A positive electrode active material was prepared in substantially the same manner as in Preparation Example 2 except that the final positive electrode active material was prepared by mixing 80 wt% of the first positive electrode active material according to Preparation Example 1 and 20 wt% of the second positive electrode active material.

### Preparation Example 7

A positive electrode active material was prepared in substantially the same manner as in Preparation Example 2 except that the final positive electrode active material was prepared by mixing 70 wt% of the first positive electrode active material according to Preparation Example 1 and 30 wt% of the second positive electrode active material.

### Example 1

### (1) Manufacturing of Positive Electrode

97.4 wt% of the positive electrode active material according to Preparation Example 3, 2.4 wt% of a PVDF binder, and 0.2 wt% of a thin walled carbon nanotube conductive material were mixed in an NMP solvent to prepare a positive electrode active material slurry. The diameter of the thin walled carbon nanotube was measured to be 5 nm, and the specific surface area of the thin walled carbon nanotube was measured to be 250 m²/g. The prepared positive electrode active material slurry was coated on an aluminum foil current collector and then, dried and compressed to manufacture a positive electrode.

### (2) Manufacturing of Negative Electrode

97.3 wt% of graphite, 0.5 wt% of denka black, 0.9 wt% of carboxymethyl cellulose, and 1.3 wt% of a styrene-butadiene rubber were mixed in an aqueous solvent to prepare a negative electrode active material slurry. The prepared negative electrode active material slurry was coated on a copper foil current collector and then, dried and compressed to manufacture a negative electrode.

### (3) Manufacturing of Rechargeable Lithium Battery Cell

A polytetrafluoroethylene separator and an electrolyte solution prepared by dissolving 1 M LiPF₆ in a mixed solvent of ethylene carbonate and dimethyl carbonate in a volume ratio of 3:7 were used to manufacture a rechargeable lithium battery cell in a suitable (e.g., common) method.

### Example 2

A positive electrode and a rechargeable lithium battery cell were manufactured in substantially the same manner as in Example 1 except that the positive electrode slurry was prepared by mixing 97.2 wt% of the positive electrode active material of Preparation Example 3, 2.4 wt% of a PVDF binder, and 0.4 wt% of a thin walled carbon nanotube conductive material in the manufacture of the positive electrode.

### Example 3

A positive electrode and a rechargeable lithium battery cell were manufactured in substantially the same manner as in Example 1 except that the positive electrode slurry was prepared by mixing 97.0 wt% of the positive electrode active material of Preparation Example 3, 2.4 wt% of a PVDF binder, and 0.6 wt% of a thin walled carbon nanotube conductive material in the manufacture of the positive electrode.

### Example 4

A positive electrode and a rechargeable lithium battery cell were manufactured in substantially the same manner as in Example 1 except that the positive electrode slurry was prepared by mixing 96.8 wt% of the positive electrode active material of Preparation Example 3, 2.4 wt% of a PVDF binder, and 0.8 wt% of a thin walled carbon nanotube conductive material in the manufacture of the positive electrode.

### Example 5

A positive electrode and a rechargeable lithium battery cell were manufactured in substantially the same manner as in Example 1 except that the positive electrode slurry was prepared by mixing 96.6 wt% of the positive electrode active material of Preparation Example 3, 2.4 wt% of a PVDF binder, and 1.0 wt% of a thin walled carbon nanotube conductive material in the manufacture of the positive electrode.

### Comparative Example 1

A positive electrode and a rechargeable lithium battery cell were manufactured in substantially the same manner as in Example 1 except that the positive electrode slurry was prepared by mixing 95.8 wt% of the positive electrode active material of Preparation Example 3, 2.4 wt% of a PVDF binder, and 1.8 wt% of a TDS-L conductive material, a mixture of L-carbon nanotube (Long length carbon nanotube) and LiTX66 in the manufacture of the positive electrode. The diameter of the L-carbon nanotube was measured to be 15 nm, and the specific surface area of the L-carbon nanotube was measured to be 280 m²/g. The diameter of the LiTX66 was measured to be 30 nm, and the specific surface area of the LiTX66 was measured to be 380 m²/g.

### Comparative Example 2

A positive electrode and a rechargeable lithium battery cell were manufactured in substantially the same manner as in Example 1 except that the positive electrode slurry was prepared by mixing 97.0 wt% of the positive electrode active material of Preparation Example 3, 2.4 wt% of a PVDF binder, and 0.6 wt% of a TDS-L conductive material in the manufacture of the positive electrode.

### Evaluation Example 1: Capacity and Heat Evaluation

96.8 wt% of each of the positive electrode active material of Preparation Examples 1 to 7, 2.4 wt% of a polyvinylidene fluoride binder, and 0.8 wt% of a conductive material, a mixture of carbon nanotube and particulate nanocarbon in a weight ratio of 7:3 were mixed in an NMP solvent to prepare a positive electrode active material slurry, which was coated on an aluminum foil current collector and then, dried and compressed to manufacture a positive electrode.

A negative electrode active material slurry was prepared by mixing 97.3 wt% of graphite, 0.5 wt% of denka black, 0.9 wt% of carboxymethyl cellulose, and 1.3 wt% of a styrene-butadiene rubber in an aqueous solvent. The prepared negative electrode active material slurry was coated on a copper foil current collector and then, dried and compressed to manufacture a negative electrode.

A polytetrafluoroethylene separator, and an electrolyte solution prepared by mixing ethylene carbonate and dimethyl carbonate in a volume ratio of 3:7 and dissolving 1 M LiPF₆ in the mixed solvent were used to manufacture a rechargeable lithium battery cell in a suitable (e.g., common) method.

The manufactured rechargeable lithium battery cells were charged to an upper limit voltage of 4.2 V at a constant current of 0.5 C and to 0.02 C at the constant voltage and discharged to a cut-off voltage of 2.5 V at 0.5 C at 25 °C. After the initial charging and discharging, capacity was calculated by multiplying initial discharge capacity with a weight of the positive electrode, and the results are shown in Table 1.

Next, the manufactured positive electrodes were measured with respect to a heat flow according to a temperature through Differential Scanning Calorimetry (DSC). The measurement was performed by using a differential scanning calorimeter (SENSYS Evo, SETARAM) and specifically, taking 15 mg of each of the positive electrodes charged to 4.25 V (vs. Li/Li⁺), adding 20 µl of the electrolyte solution thereto, and heating it to 400 °C at 10 °C per minute, and the results are shown in Table 1. In Table 1, Ni* represents the lithium nickel-based composite oxide.

**Table 1**

| | LFP (wt%) | Ni* (wt%) | Capacity increase rate (%) for the capacity of Preparation Example 1 | Heat (kJ) |
|---|---|---|---|---|
| Preparation Example 1 | 100 | 0 | - | 22.22 |
| Preparation Example 2 | 99 | 1 | 1.3 | 22.3 |
| Preparation Example 3 | 95 | 5 | 4.8 | 22.5 |
| Preparation Example 4 | 90 | 10 | 9.5 | 22.9 |
| Preparation Example 5 | 85 | 15 | 11.7 | 27 |
| Preparation Example 6 | 80 | 20 | 14.6 | 47 |
| Preparation Example 7 | 70 | 30 | 19.8 | 54.59 |

Referring to Table 1, compared with Preparation Example 1 including no lithium nickel-based composite oxide, the larger the content (e.g., amount) of the lithium nickel-based composite oxide, the larger the capacity. However, as the content (e.g., amount) of the lithium nickel-based composite oxide was increased, an amount of heat generated increased, and for example, if (e.g., when) the content (e.g., amount) of the lithium nickel-based composite oxide was 20 wt% or more according to Preparation Examples 6 and 7, the amount of heat generated rapidly increased.

### Evaluation Example 2

After measuring a weight of each of the positive electrode active materials included in the rechargeable lithium battery cells according to the examples and the comparative examples, nitrogen was absorbed on the positive electrode active material surface to measure an amount of the nitrogen gas adsorbed on the positive electrode active material surface, and the amount of the adsorbed nitrogen was used to obtain a specific surface area according to BET calculation equation. In addition, after measuring a weight of each of the conductive material included in the rechargeable lithium battery cells according to the examples and comparative examples, nitrogen was adsorbed on the conductive material surface to measure an amount of the nitrogen gas absorbed thereon, which was used to obtain a specific surface area according to the BET calculation equation. Then a ratio of the specific surface area of the conductive material to that of the positive electrode active material was calculated, and the results are shown in Table 2.

### Evaluation Example 3: Evaluation of Total Resistivity and Interface Resistance

Four probe tips were aligned in a straight line at an interval of 1 mm and brought into contact with the surface of each of the positive electrodes of the examples and the comparative examples, so that a constant current was applied to the outer probe to measure a potential difference from the inner probe, which was resistance, and then, the resistance was multiplied with a thickness of an electrode plate and a correction factor to obtain total resistivity and interface resistance, and the results are shown in Table 2.

### Evaluation Example 4: Ion Resistance

Each of the positive electrodes of the examples and the comparative examples was used to manufacture a symmetric cell consisting of two positive electrodes and then, measured with respect to SC-EIS (Square current electrochemical impedance spectroscopy) by setting an amplitude Va to 5 mV. The measured results were used to separate ion resistance from internal resistance of the positive electrode according to transmission line model theory, and the results are shown in Table 2.

**Table 2**

| | TWCNT (wt%) | Specific surface area ratio | Total resistivity (Ω · cm) | Interface resistance (Ω · cm²) | Ion resistance (Ω · cm²) |
|---|---|---|---|---|---|
| Example 1 | 0.2 | 6 | 8.23 | 0.04 | 13.2 |
| Example 2 | 0.4 | 10 | 6.77 | 0.032 | 12.95 |
| Example 3 | 0.6 | 17 | 3.49 | 0.022 | 12.56 |
| Example 4 | 0.8 | 24 | 2.62 | 0.019 | 12.21 |
| Example 5 | 1.0 | 31 | 1.35 | 0.010 | 13.10 |
| Comparative Example 1 | TDS-L 1.8 | 66 | 9.61 | 0.06 | 13.19 |
| Comparative Example 2 | TDS-L 0.6 | 22 | 14.2 | 0.13 | 13.01 |

Referring to Table 2, the examples using a thin-walled carbon nanotube conductive material exhibited lower total resistivity, interface resistance, and ion resistance compared to the comparative examples that did not use the thin-walled carbon nanotube conductive material. In particular, Examples 2 to 4, which included 0.4 wt% to 0.8 wt% of the thin-walled carbon nanotube, showed significantly lower resistivity, interface resistance, and ion resistance.

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that present disclosure is not limited to the disclosed embodiments. On the contrary, it is intended to cover one or more suitable modifications and equivalent arrangements included within the spirit and scope of the appended claims, and equivalents thereof. Reference Numerals

| | | | |
|---|---|---|---|
| 100 : | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a first positive electrode active material comprising a lithium iron phosphate-based compound; and
a second positive electrode active material comprising a lithium nickel-based composite oxide;
wherein the second positive electrode active material is ≥ 1 wt% to ≤ 15 wt% in amount based on a total 100 wt% of the first positive electrode active material and second positive electrode active material.

2. The positive electrode active material as claimed in claim 1, wherein
the lithium iron phosphate-based compound is represented by Chemical Formula 1 or Chemical Formula 2:
[Chemical Formula 1] Liₐ₁Fe₍₁₋ₓ₁₎M1ₓ₁PO₄,
wherein, in Chemical Formula 1,
0.90≤a1≤1.5, 0≤x1≤0.4, and
M1 is Al, B, Ca, Ce, Cr, Cu, La, Mg, Mn, Mo, Nb, Ni, Si, Sn, Sr, Ti, V, W, Y, Zn, Zr, or a combination thereof,
[Chemical Formula 2] Liₐ₂Mnₓ₂Fe_{(1-x2-y2)}M2_{y2}PO₄,
wherein, in Chemical Formula 2,
0.90≤a2≤1.5, 0.1≤x2≤0.9, 0≤y2≤0.9, and
M2 is Al, B, Ca, Ce, Cr, Cu, La, Mg, Mo, Nb, Ni, Sn, Si, Sn, Sr, Ti, V, W, Y, Zn, Zr, or a combination thereof.

3. The positive electrode active material as claimed in claim 1 or 2, wherein
the lithium iron phosphate-based compound comprises LiFePO₄, LiMn_{0.}7Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, or a combination thereof.

4. The positive electrode active material as claimed in any of the claims 1 to 3, wherein
nickel is greater than or equal to 80 mol% in amount based on a total 100 mol% of all metals excluding lithium in the lithium nickel-based composite oxide.

5. The positive electrode active material as claimed in any of the claims 1 to 4, wherein
the lithium nickel-based composite oxide is represented by Chemical Formula 3:
[Chemical Formula 3] Liₐ₃Niₓ₃M3_{y3}M4_{z3}O_{2-b3}X_{b3},
wherein, in Chemical Formula 3,
0.9≤a3≤1.8, 0.3≤x3≤1, 0≤y3≤0.7, 0≤z3≤0.7, 0.9≤x3+y3+z3≤1.1, and 0 ≤b3≤0.1,
M3 and M4 are each independently one or more elements selected from among Al, B, Ba, Ca, Ce, Co, Cr, Cu, Fe, Mg, Mn, Mo, Nb, Si, Sn, Sr, Ti, V, W, Zn, and Zr, and
X is one or more elements selected from among F, P, and S.

6. A positive electrode (10), comprising:
a current collector; and
a positive electrode active material layer on the current collector;
wherein the positive electrode active material layer comprises the positive electrode active material as claimed in any of the claims 1 to 5 and a thin walled carbon nanotube.

7. The positive electrode (10) as claimed in claim 6, wherein
the thin walled carbon nanotube has an average diameter of ≥ 1 nm to ≤ 10 nm.

8. The positive electrode (10) as claimed in claim 6 or 7, wherein
the thin walled carbon nanotube is ≥ 0.1 wt% to ≤ 1.0 wt% in amount based on a total 100 wt% of the positive electrode active material layer.

9. The positive electrode (10) as claimed in any of the claims 6 to 8, wherein
the thin walled carbon nanotube is ≥ 0.4 wt% to ≤ 0.8 wt% in amount based on a total 100 wt% of the positive electrode active material layer.

10. The positive electrode (10) as claimed in any of the claims 6 to 9, wherein
a specific surface area of the thin walled carbon nanotube is ≥ 200 m²/g to ≤ 300 m²/g.

11. The positive electrode (10) as claimed in any of the claims 6 to 10, wherein
in the positive electrode active material layer, a ratio of a specific surface area of the thin walled carbon nanotube to a specific surface area of the positive electrode active material is ≥ 10% to ≤ 40%.

12. The positive electrode (10) as claimed in any of the claims 6 to 11, wherein
in the positive electrode active material layer, a ratio of a specific surface area of the thin walled carbon nanotube to a specific surface area of the positive electrode active material is ≥ 15% to ≤ 30%.

13. A rechargeable lithium battery (100), comprising:
the positive electrode (10) as claimed in any of the claims 6 to 12
a negative electrode (20), and
an electrolyte.

14. The rechargeable lithium battery (100) as claimed in claim 13, wherein
the negative electrode (20) comprises a carbon-based negative electrode active material, a lithium metal, a lithium metal alloy, a silicon-based negative electrode active material, or a combination thereof.
